# EUROPÄISCHE PATENTSCHRIFT

(11) **EP 3 645 325 B1**
(45) Veröffentlichungstag und Bekanntmachung des Hinweises auf die Patenterteilung: **07.07.2021**
(21) Anmeldenummer: 18730222.9
(22) Anmeldetag: 25.05.2018
(51) Int. Cl.: B60K 6/387, B60K 6/48, B60W 10/02, B60W 10/06, B60W 10/08, B60W 20/40

(54) **VERFAHREN UND STEUER- UND REGELEINRICHTUNG ZUR KOMPENSATION EINES KUPPLUNGSMOMENTS EINER HYBRIDTRENNKUPPLUNG UNTER BERÜCKSICHTUNG DER DREHZAHL EINER ELEKTRISCHEN MASCHINE**
METHOD AND OPEN-LOOP AND CLOSED-LOOP CONTROL DEVICE FOR COMPENSATING FOR A CLUTCH TORQUE OF A HYBRID SEPARATING CLUTCH TAKING INTO CONSIDERATION THE ROTATIONAL SPEED OF AN ELECTRIC MACHINE
PROCÉDÉ ET DISPOSITIF DE COMMANDE ET DE RÉGLAGE POUR LA COMPENSATION D'UN COUPLE D'ACCOUPLEMENT D'UN ACCOUPLEMENT DE SÉPARATION HYBRIDE EN PRENANT EN COMPTE LA VITESSE DE ROTATION D'UNE MACHINE ÉLECTRIQUE

(30) Priorität: 26.06.2017 DE 102017114055
(43) Veröffentlichungstag der Anmeldung: 06.05.2020
(73) Patentinhaber: Schaeffler Technologies AG & Co. KG, 91074 Herzogenaurach (DE)
(72) Erfinder: WEBER, Christian, 76135 Karlsruhe (DE); MANNSPERGER, Ralf, 77871 Renchen (DE)
(86) Internationale Anmeldenummer: PCT/DE2018/100510
(87) Internationale Veröffentlichungsnummer: WO 2019/001622

(56) Entgegenhaltungen:
- EP-A2- 2 011 681
- DE-A1-102010 023 505
- DE-A1-102013 104 747
- DE-A1-102013 226 115

## Beschreibung

Die vorliegende Erfindung betrifft ein Verfahren zur Kompensation eines Kupplungsmoments einer Hybridtrennkupplung unter Berücksichtigung der Drehzahl einer elektrischen Maschine. Die elektrische Maschine ist dabei Teil eines Hybridantriebs eines Kraftfahrzeugs. Die Trennkupplung ist zwischen einem Verbrennungsmotor und der elektrischen Maschine vorgesehen. Ferner ist ein Aktor zur Betätigung der Trennkupplung zugeordnet.

Ferner betrifft die Erfindung eine Steuer- und Regeleinrichtung zur Kompensation eines Kupplungsmoments einer Trennkupplung, die zwischen einem Verbrennungsmotor und einer elektrischen Maschine vorgesehen ist.

Die deutsche Offenlegungsschrift DE 101 27 766 A1 offenbart ein Verfahren und eine Vorrichtung zur Kompensation des Einflusses der Drehzahl auf die Stellmomentenkennlinie einer Kupplung. Hierzu wird die Drehzahl der Kupplung gemessen und eine der Stellmomentenkennlinie entsprechende Sollstellung eines Stellglieds für die Kupplung in Abhängigkeit von der Drehzahl verändert. Diese Drehzahlkompensation berücksichtigt nur die Verbrennungsmotordrehzahl.

Die deutsche Offenlegungsschrift DE 10 2008 027 071 A1 offenbart ein Verfahren zur Reibwertadaption einer in einem Hybridantriebsstrang zwischen einer Elektromaschine und einem Verbrennungsmotor angeordneten, von einem Kupplungsaktor betätigten, Reibkupplung. Der Reibwert wird mittels eines von einer Reibungskupplung übertragenen Moments adaptiert, das bei einem Anlassen des Verbrennungsmotors mittels der Elektromaschine ermittelt wird.

Die deutsche Offenlegungsschrift DE 10 2016 222 466 A1 offenbart ein Verfahren zum Überprüfen des Momentenübertragungsverhaltens einer Trennkupplung eines Hybridantriebs für ein Kraftfahrzeug. Es ist vorgesehen, dass der Hybridantrieb zur Überprüfung des Momentenübertragungsverhaltens der Trennkupplung gezielt in einen Betriebszustand mit geschlossener Trennkupplung versetzt wird, bei dem die überschüssige Leistung des Verbrennungsmotors über die elektrische Maschine in elektrische Energie umgewandelt wird, wobei das Auftreten eines messbaren Schlupfes bei diesem Betriebszustand analysiert wird. Die deutsche Offenlegungsschrift DE 102013104747 A1 offenbart ein Verfahren zur Adaption einer Kennlinie einer zwischen einem Verbrennungsmotor und einem Elektromotor vorgesehen Trennkupplung.

Der Erfindung liegt die Aufgabe zugrunde, ein Verfahren zur Kompensation eines Kupplungsmoments einer Trennkupplung zu schaffen, bei der für die Kompensation die Drehzahl einer elektrischen Maschine eines Hybridantriebsstrangs eines Kraftfahrzeugs berücksichtigt wird.

Diese Aufgabe wird durch ein Verfahren zur Kompensation eines Kupplungsmoments der Trennkupplung unter Berücksichtigung der Drehzahl einer elektrischen Maschine gelöst, das die Merkmale des Anspruchs 1 umfasst.

Eine weitere Aufgabe der Erfindung ist, eine Steuer- und Regeleinrichtung zur Kompensation eines Kupplungsmoments einer Trennkupplung zu schaffen, die zwischen einem Verbrennungsmotor und einer elektrischen Maschine vorgesehen ist, wobei die Steuer- und Regeleinrichtung für die Kompensation des Kupplungsmoments die Drehzahl der elektrischen Maschine berücksichtigen soll.

Die obige Aufgabe wird durch eine Steuer- und Regeleinrichtung zur Kompensation eines Kupplungsmoments einer Trennkupplung gelöst, die die Merkmale des Anspruchs 6 umfasst.

Das erfindungsgemäße Verfahren zur Kompensation eines Kupplungsmoments einer Trennkupplung unter Berücksichtigung der Drehzahl einer elektrischen Maschine eines Hybridantriebs für ein Kraftfahrzeug zeichnet sich dadurch aus, dass die Trennkupplung zwischen dem Verbrennungsmotor und der elektrischen Maschine vorgesehen ist. Ferner ist ein Aktor der Trennkupplung zugeordnet, der zur Betätigung derselben vorgesehen ist. Gemäß dem erfindungsgemäßen Verfahren wird zunächst eine Kalibrationsfunktion in einer Steuer- und Regeleinrichtung gespeichert. Die Kalibrationsfunktion stellt einen Faktor als Funktion der Drehzahl der elektrischen Maschine dar. Anschließend wird im Fahrbetrieb ein entsprechendes Kupplungsmoment von der Trennkupplung erfordert. Anhand der im Speicher abgelegten Kalibrationsfunktion wird dann ein Ausrückweg berechnet und am Aktor eingestellt. In Abhängigkeit von der Drehzahl der elektrischen Maschine wird dann ein Faktor berechnet, der das erforderliche Kupplungsmoment intern erhöht oder verringert.

Die in der Steuer- und Regeleinrichtung in dem dafür vorgesehenen Speicher hinterlegte Kennlinie, bzw. Kalibrationsfunktion, die die Momentenkapazität der Kupplung abhängig vom Ausrückweg des Aktors angibt, wird unter Berücksichtigung der Drehzahl der elektrischen Maschine so angepasst, dass die Wirkung der Drehzahl auf die Momentenkapazität kompensiert wird. Dies ist ein Vorteil der gegenwärtigen Erfindung.

In einer Ausführungsform ist der von der Drehzahl der elektrischen Maschine abhängige Faktor der Ausrückweg des Aktors, der zu einer aktuellen Position des Aktors addiert bzw. subtrahiert wird. Durch die Addition bzw. Subtraktion wird dem Einfluss der Drehzahl der elektrischen Maschine auf das erforderliche Kupplungsmoment entgegengewirkt.

In einer Ausführungsform wird zwischen dem im Fahrbetrieb erforderlichen Kupplungsmoment und der Berechnung der Position des Aktors der von der Drehzahl der elektrischen Maschine abhängige Faktor berechnet. Hierdurch kann insbesondere eine Position des Aktors eingestellt werden, die von einer Kennlinie des Kupplungsmoments und gleichzeitig von der Drehzahl der elektrischen Maschine abhängig ist. Dadurch ist es möglich, die Genauigkeit der ausrückwegabhängigen Momentenkapazität genau einzustellen.

Erfindungsgemäß ist ebenso ein Computerprogrammprodukt vorgesehen, das auf einem nicht flüchtigen und computerlesbaren Medium bereitgestellt ist. Mit dem Computerprogrammprodukt wird eine Steuer- und Regeleinrichtung veranlasst, das erfindungsgemäße Verfahren zur Kompensation des Kupplungsmoments einer Trennkupplung einzustellen, die zwischen einem Verbrennungsmotor und einer elektrischen Maschine vorgesehen ist.

Ein weiterer Aspekt der Erfindung ist, dass eine Steuer- und Regeleinrichtung zur Kompensation eines Kupplungsmoments einer Trennkupplung vorgestellt wird, wobei die Trennkupplung zwischen einem Verbrennungsmotor und einer elektrischen Maschine vorgesehen ist. Die Steuer- und Regeleinrichtung umfasst einen Speicher, in dem eine Kalibrationsfunktion hinterlegt ist, die einen Faktor als Funktion der Drehzahl der elektrischen Maschine abbildet. Ein Aktor der Trennkupplung ist mit der Steuer- und Regeleinrichtung über eine Kommunikationsverbindung verbunden. Über die Kommunikationsverbindung empfängt der Aktor von der Steuer- und Regeleinrichtung im Fahrbetrieb ein Maß für den Ausrückweg des Aktors der Trennkupplung. Dadurch kann ein entsprechendes Kupplungsmoment der Trennkupplung eingestellt werden. Ebenso ist die elektrische Maschine über eine Kommunikationsverbindung mit der Steuer- und Regeleinrichtung verbunden. Abhängig von der Drehzahl der elektrischen Maschine wird ein Faktor berechnet, der das erforderliche Kupplungsmoment der Trennkupplung intern erhöht oder verringert.

In einer Ausführungsform ist mit dem Aktor der Trennkupplung in Abhängigkeit von der Drehzahl der elektrischen Maschine ein berechneter Ausrückweg der Trennkupplung einstellbar, so dass eine Kompensation der Drehzahl der elektrischen Maschine möglich ist.

Ferner offenbart die Erfindung einen Hybridantrieb für ein Kraftfahrzeug, der einen Verbrennungsmotor, eine elektrische Maschine und eine zwischen dem Verbrennungsmotor und der elektrischen Maschine zwischengeschaltete Trennkupplung aufweist. Eine Steuer- und Regeleinrichtung umfasst dabei einen Speicher, in dem eine Kalibrationsfunktion hinterlegt ist, die einen Faktor als Funktion der Drehzahl der elektrischen Maschine abbildet.

Die Kalibrationsfunktion bzw. die Kalibrationskurve hat auf der Abszisse die Drehzahl der elektrischen Maschine aufgetragen. Auf der Ordinate ist ein Faktor dargestellt, der den Einfluss auf die Momentenkapazität der Trennkupplung ausdrückt. Bei der Fahrt mit dem Kraftfahrzeug wird ein Drehmoment von der Trennkupplung gefordert. Anhand der Kalibrationsfunktion bzw. der Kalibrationskurve wird ein Ausrückweg berechnet und am Aktor der Trennkupplung eingestellt. Zwischen dem Fordern des Kupplungsmoments und der Berechnung der Position des Aktors wird abhängig von der Drehzahl der elektrischen Maschine ein Faktor berechnet, der das geforderte Moment intern erhöht bzw. verringert. Dadurch wird eine Position des Aktors eingestellt, die von der Momentenkennlinie und gleichzeitig von der Drehzahl der elektrischen Maschine abhängig ist. Somit ist es möglich, dass mit der Erfindung die Wirkung des Drehzahleffekts auf die Momentenkapazität der Trennkupplung kompensiert wird.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Figur 1: eine schematische Ansicht einer Trennkupplung, die zwischen einem Verbrennungsmotor und einer elektrischen Maschine angeordnet ist (serieller Hybridantriebsstrang);
- Figur 2: eine schematische Darstellung eines Hybridantriebs für ein Kraftfahrzeug, bei dem das erfindungsgemäße Verfahren zur Kompensation eines Kupplungsmoments einer Hybridtrennkupplung unter Berücksichtigung der Drehzahl einer elektrischen Maschine realisiert ist, und
- Figur 3: eine schematische Darstellung der Wirkungsweise des Aktors auf die Trennkupplung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

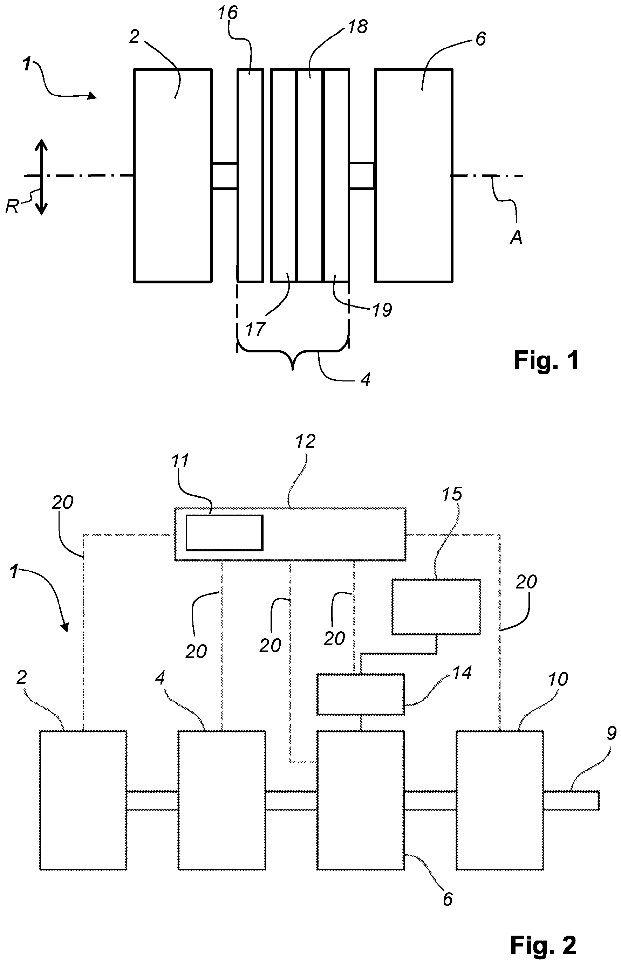

**Figur 1** zeigt eine schematische Darstellung einer Trennkupplung 4, die zwischen einem Verbrennungsmotor 2 und einer elektrischen Maschine 6 einer Ausführungsform eines Hybridantriebs 1 vorgesehen ist. Die Trennkupplung 4 umfasst eine Kupplungsscheibe 16, eine Tellerfeder 17, eine Druckscheibe 18 und eine Gegendruckplatte 19. Die Kupplungsscheibe 16 ist dabei mit dem Verbrennungsmotor 2 drehfest verbunden. Die Tellerfeder 17, die Druckscheibe 18 und die Gegendruckplatte 19 sind mit der elektrischen Maschine 6 drehfest verbunden. Bevorzugterweise sind die Tellerfeder 17, die Druckscheibe 18 und die Gegendruckplatte 19 im Rotor (nicht dargestellt) der elektrischen Maschine 6 integriert und drehen mit dessen Rotationsgeschwindigkeit (Drehzahl).

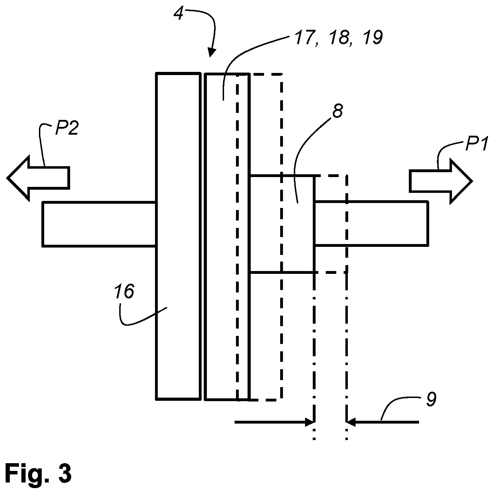

**Figur 2** zeigt eine schematische Ansicht einer Ausführungsform einer Steuer- und Regeleinrichtung 12 zur Kompensation des Kupplungsmoments einer Trennkupplung 4, die zwischen dem Verbrennungsmotor 2 und der elektrischen Maschine 6 eines Hybridantriebs 1 vorgesehen ist. Die Steuer- und Regeleinrichtung 12 umfasst einen Speicher 11, in dem die Kalibrationsfunktion (nicht dargestellt) hinterlegt ist. Die Kalibrationsfunktion bildet einen Faktor als Funktion der Drehzahl der elektrischen Maschine 6 ab. Der Hybridantrieb 1 umfasst im Wesentlichen den Verbrennungsmotor 2, die Trennkupplung 4, die elektrische Maschine 6 und ein Getriebe 10. All diese Elemente sind jeweils über eine Kommunikationsverbindung 20 mit der Steuer- und Regeleinrichtung 12 verbunden. Zusätzlich ist der elektrischen Maschine 6 in der dargestellten Ausführungsform eine Ladevorrichtung 14 zugeordnet, über die ein mit der Ladevorrichtung 14 verbundener Energiespeicher 15 aufgeladen werden kann, bzw. über die die elektrische Maschine 6 aus dem Energiespeicher 15 die für den Antrieb erforderliche Energie entnimmt. Die Ladevorrichtung 14 ist ebenfalls über eine Kommunikationsverbindung 20 mit der Steuer- und Regeleinrichtung 12 verbunden. Über die Kommunikationsverbindung 2 werden im Fahrbetrieb beispielsweise die Drehzahl des Verbrennungsmotors 2 und die Drehzahl der elektrischen Maschine 6 an die Steuer- und Regeleinrichtung 12 geliefert. Wie bereits vorstehend erwähnt, ist im Speicher 11 eine entsprechende Kalibrationsfunktion hinterlegt, die einen Faktor als Funktion der Drehzahl der elektrischen Maschine 6 abbildet. Bei einem Fahrbetrieb erfordert die Trennkupplung 4 ein entsprechendes Kupplungsmoment. Anhand der im Speicher 11 hinterlegten Kalibrationsfunktion kann dann ein Ausrückweg 9 des Aktors 8 (siehe **Figur 3**) eingestellt werden, damit der Ausrückweg 9 an die Drehzahl der elektrischen Maschine 6 angepasst wird. Somit wird anhand der Kalibrationsfunktion ein Faktor berechnet, der unter Berücksichtigung der Drehzahl der elektrischen Maschine 6 das erforderliche Kupplungsmoment der Trennkupplung 4 intern erhöht oder verringert. Dies hat den Vorteil, dass die Wirkung der Drehzahl der elektrischen Maschine 6 die Momentenkapazität der Trennkupplung 4 kompensiert.

**Figur 3** zeigt eine schematische Darstellung der Trennkupplung 4 in Verbindung mit dem Aktor 8. Der Aktor 8 ist auf der Seite der Tellerfeder 17, Druckscheibe 18 und Gegendruckplatte 19 vorgesehen. Dies bedeutet, dass der Aktor 8 auf derjenigen Seite der Elemente (Tellerfeder 17, Druckscheibe 18 und Gegendruckplatte 19) der Trennkupplung 4 vorgesehen ist, die mit der Drehzahl der elektrischen Maschine 6 drehen. Der Pfeil P1 deutet die Richtung der elektrischen Maschine 6 an. Der Pfeil P2 deutet die Richtung des Verbrennungsmotors 2 an. Wie bereits in der Beschreibung zu **Figur 2** erwähnt, wird anhand der Drehzahl der elektrischen Maschine 6 ein Faktor berechnet, der das erforderliche Kupplungsmoment intern erhöht oder verringert. Je nach Fahrsituation oder Fahrbetrieb wird ein entsprechendes Kupplungsmoment der Trennkupplung 4 erforderlich, um das Kupplungsmoment an die Drehzahl der elektrischen Maschine 6 anzupassen. Folglich wird am Aktor 8 ein entsprechender Ausrückweg 9 eingestellt, der zur aktuellen Position des Aktors 8 addiert bzw. subtrahiert wird. Dies hat den Vorteil, dass man dadurch dem Einfluss der Drehzahl der elektrischen Maschine 6 auf die Momentenkapazität entgegenwirken kann und die Genauigkeit der Momentenkapazität in Abhängigkeit vom Ausrückweg 9 einstellen kann. Das Maß des Ausrückwegs 9 der Trennkupplung 4 ist somit ebenfalls ein Maß für die Momentenkapazität. Die so eingestellte Position des Aktors 8 ist von der Kalibrationsfunktion (Momentenkennlinie) und gleichzeitig von der Drehzahl der elektrischen Maschine 6 abhängig. Somit wird die Wirkung des Drehzahleffekts auf die Momentenkapazität der Trennkupplung 4 kompensiert.

Die Erfindung wurde in Bezug auf bevorzugte Ausführungsformen beschrieben, die in keinster Wiese als eine Beschränkung der Erfindung aufzufassen sind. Es ist für einen Fachmann jedoch selbstverständlich, dass Änderungen und Abwandlungen gemacht werden können, ohne dabei den Schutzbereich der nachstehenden Ansprüche zu verlassen.

### Bezugszeichenliste

- 1: Hybridantrieb
- 2: Verbrennungsmotor
- 4: Trennkupplung
- 6: elektrische Maschine
- 8: Aktor
- 9: Ausrückweg
- 10: Getriebe
- 11: Speicher
- 12: Steuer- und Regeleinrichtung
- 14: Ladevorrichtung
- 15: Energiespeicher
- 16: Kupplungsscheibe
- 17: Tellerfeder
- 18: Druckscheibe
- 19: Gegendruckplatte
- 20: Kommunikationsverbindung
- A: Richtung der Achse
- P1: Pfeil (Richtung der elektrischen Maschine)
- P2: Pfeil (Richtung des Verbrennungsmotors)
- R: radiale Richtung

## Patentansprüche

1. Verfahren zur Kompensation eines Kupplungsmoments einer Trennkupplung (4) unter Berücksichtigung der Drehzahl einer elektrischen Maschine (6) eines Hybridantriebs (1) für ein Kraftfahrzeug, wobei die Trennkupplung (4) zwischen einem Verbrennungsmotor (2) und der elektrischen Maschine (6) vorgesehen ist und ein Aktor (8) zu der Trennkupplung (4) zu deren Betätigung zugeordnet ist, **gekennzeichnet durch** die folgenden Schritte:
• dass eine Kalibrationsfunktion, die einen Faktor als Funktion der Drehzahl der elektrischen Maschine (6) abbildet, in einem Speicher (11) einer Steuer- und Regeleinrichtung (12) gespeichert wird;
• dass im Fahrbetrieb ein entsprechendes Kupplungsmoment der Trennkupplung (4) erforderlich wird, und anhand der Kalibrationsfunktion ein Ausrückweg (9) berechnet und am Aktor (8) eingestellt wird; und
• dass abhängig von der Drehzahl der elektrischen Maschine (6) ein Faktor berechnet wird, der das erforderliche Kupplungsmoment intern erhöht oder verringert.

2. Verfahren nach Anspruch 1, wobei der von der Drehzahl der elektrischen Maschine (6) abhängige Faktor der Ausrückweg (9) des Aktors (8) ist, der zu einer aktuellen Position des Aktors (8) addiert bzw. subtrahiert wird, um dem Einfluss der Drehzahl der elektrischen Maschine (6) auf das erforderliche Kupplungsmoment entgegenzuwirken.

3. Verfahren nach einem der vorangehenden Ansprüche, wobei zeitlich zwischen dem im Fahrbetrieb erforderlichen Kupplungsmoment und der Berechnung der Position des Aktors (8) der von der Drehzahl der elektrischen Maschine (6) abhängige Faktor berechnet wird.

4. Verfahren nach einem der vorangehenden Ansprüche, wobei hierdurch eine Position des Aktors (8) eingestellt wird, die von einer Kennlinie des Kupplungsmoments und gleichzeitig von der Drehzahl der elektrischen Maschine (6) abhängig ist.

5. Computerprogrammprodukt, wobei das Computerprogrammprodukt auf einem nicht-flüchtigen und computerlesbaren Medium bereitgestellt ist und eine Steuer- und Regeleinrichtung (12) veranlasst, ein Verfahren nach einem der vorangehenden Ansprüche auszuführen.

6. Steuer- und Regeleinrichtung (12) zur Kompensation eines Kupplungsmoments einer Trennkupplung (4), die zwischen einem Verbrennungsmotor (2) und einer elektrischen Maschine (6) vorgesehen ist, **dadurch gekennzeichnet, dass**
• die Steuer- und Regeleinrichtung (12) einen Speicher (11) umfasst, im dem eine Kalibrationsfunktion hinterlegt ist, die einen Faktor als Funktion der Drehzahl der elektrischen Maschine (6) abbildet;
• ein Aktor (8) der Trennkupplung (4) mit der Steuer- und Regeleinrichtung (12) über eine Kommunikationsverbindung (20) verbunden ist, wobei über die Kommunikationsverbindung (20) der Aktor (8) von der Steuer- und Regeleinrichtung (12) im Fahrbetrieb ein Maß für den Ausrückweg (9) des Aktors (8) empfängt, um ein entsprechendes Kupplungsmoment der Trennkupplung (4) einzustellen;
• die elektrische Maschine (6) über eine Kommunikationsverbindung (20) mit der Steuer- und Regeleinrichtung (12) verbunden ist, die abhängig von der Drehzahl der elektrischen Maschine (6) einen Faktor berechnet, der das erforderliche Kupplungsmoment der Trennkupplung (4) intern erhöht oder verringert.

7. Steuer- und Regeleinrichtung nach Anspruch 6, wobei mit dem Aktor (8) der Trennkupplung (4) ein in Abhängig von der Drehzahl der elektrischen Maschine (6) berechneter Ausrückweg der Trennkupplung (6) einstellbar ist.

8. Hybridantrieb für ein Kraftfahrzeug, mit einem Verbrennungsmotor (2), einer elektrischen Maschine (6) und einer zwischen dem Verbrennungsmotor(2) und der elektrischen Maschine (6) zwischengeschalteten Trennkupplung (4), **gekennzeichnet durch** eine Steuer- und Regeleinrichtung (12) nach einem der Ansprüche 6 bis 7.

## Claims

1. A method for compensating a clutch torque of a separating clutch (4) taking into account the rotational speed of an electric machine (6) of a hybrid drive (1) for a motor vehicle, the separating clutch (4) being provided between an internal combustion engine (2) and the electric machine (6) and an actuator (8) being associated with the separating clutch (4) for actuating same, **characterised by** the following steps:
• that a calibration function which maps a factor as a function of the rotational speed of the electric machine (6) is stored in a memory (11) of an open-loop and closed-loop control device (12);
• that a corresponding clutch torque of the separating clutch (4) is required in driving mode, and a disengagement path (9) is calculated using the calibration function and set on the actuator (8); and
• that, depending on the rotational speed of the electric machine (6), a factor is calculated that internally increases or decreases the required clutch torque.

2. The method according to claim 1, wherein the factor dependent on the rotational speed of the electric machine (6) is the disengagement path (9) of the actuator (8), which is added to or subtracted from a current position of the actuator (8), in order to counteract the influence of the rotational speed of the electric machine (6) on the required clutch torque.

3. The method according to one of the preceding claims, wherein the factor dependent on the rotational speed of the electric machine (6) is calculated chronologically between the clutch torque required in driving mode and the calculation of the position of the actuator (8).

4. The method according to one of the preceding claims, wherein a position of the actuator (8) is set which is dependent on a characteristic curve of the clutch torque and, at the same time, on the rotational speed of the electric machine (6).

5. A computer program product, wherein the computer program product is provided on a non-volatile and computer-readable medium and causes an open-loop and closed-loop control device (12) to carry out a method according to one of the preceding claims.

6. An open-loop and closed-loop control device (12) for compensating a clutch torque of a separating clutch (4), which is provided between an internal combustion engine (2) and an electric machine (6), **characterised in that**
• the open-loop and closed-loop control device (12) comprises a memory (11) in which a calibration function which maps a factor as a function of the rotational speed of the electric machine (6) is stored;
• an actuator (8) of the separating clutch (4) is connected to the open-loop and closed-loop control device (12) via a communication link (20), wherein in driving mode the actuator (8) receives a measurement for the disengagement path (9) of the actuator (8) from the open-loop and closed-loop control device (12) via the communication link (20), in order to set a corresponding clutch torque of the separating clutch (4);
• the electric machine (6) is connected to the open-loop and closed-loop control device (12) via a communication link (20), which calculates a factor depending on the rotational speed of the electric machine (6), which internally increases or decreases the required clutch torque of the separating clutch (4).

7. The open-loop and closed-loop control device according to claim 6, wherein a disengagement path of the separating clutch (6) calculated as a function of the rotational speed of the electric machine (6) can be set using the actuator (8) of the separating clutch (4).

8. A hybrid drive for a motor vehicle, having an internal combustion engine (2), an electric machine (6), and a separating clutch (4) interposed between the internal combustion engine (2) and the electric machine (6), **characterised by** an open-loop and closed-loop control device (12) according to one of claims 6 to 7.

## Revendications

1. Procédé de compensation d'un couple d'accouplement d'un accouplement de séparation (4) en prenant en compte la vitesse de rotation d'une machine électrique (6) d'un entraînement hybride (1) pour un véhicule à moteur, l'accouplement de séparation (4) étant prévu entre un moteur à combustion interne (2) et la machine électrique (6) et un actionneur (8) étant associé à l'accouplement de séparation (4) pour son actionnement, **caractérisé par** les étapes suivantes :
• une fonction d'étalonnage, laquelle reproduit un facteur comme fonction de la vitesse de rotation de la machine électrique (6), est stockée dans une mémoire (11) d'un dispositif de commande et de réglage (12) ;
• en mode de conduite, un couple d'accouplement correspondant de l'accouplement de séparation (4) est requis et une course de débrayage (9) est calculée sur la base de la fonction d'étalonnage et réglée sur l'actionneur (8) ; et
• en fonction de la vitesse de rotation de la machine électrique (6), un facteur est calculé qui augmente ou diminue en interne le couple d'accouplement requis.

2. Procédé selon la revendication 1, dans lequel le facteur dépendant de la vitesse de rotation de la machine électrique (6) est la course de débrayage (9) de l'actionneur (8), laquelle est ajoutée ou soustraite à une position actuelle de l'actionneur (8) afin d'influencer la vitesse de rotation de la machine électrique (6) pour contrer le couple d'accouplement requis.

3. Procédé selon l'une quelconque des revendications précédentes, le facteur dépendant de la vitesse de rotation de la machine électrique (6) étant calculé temporellement entre le couple d'accouplement requis en mode de conduite et le calcul de la position de l'actionneur (8).

4. Procédé selon l'une quelconque des revendications précédentes, une position de l'actionneur (8), qui dépend d'une courbe caractéristique du couple d'accouplement et en même temps de la vitesse de rotation de la machine électrique (6), étant ainsi réglée.

5. Produit constitué par un programme d'ordinateur, le produit constitué par un programme d'ordinateur étant fourni sur un support non volatil et lisible par ordinateur et amenant un dispositif de commande et de réglage (12) à exécuter un procédé selon l'une quelconque des revendications précédentes.

6. Dispositif de commande et de réglage (12) pour la compensation d'un couple d'accouplement d'un accouplement de séparation (4), lequel est prévu entre un moteur à combustion interne (2) et une machine électrique (6), **caractérisé en ce que**
• le dispositif de commande et de réglage (12) comprend une mémoire (11) dans laquelle est stockée une fonction d'étalonnage qui reproduit un facteur comme fonction de la vitesse de rotation de la machine électrique (6) ;
• un actionneur (8) de l'accouplement de séparation (4) est connecté au dispositif de commande et de réglage (12) par le biais d'une liaison de communication (20), l'actionneur (8) recevant du dispositif de commande et de réglage (12) par le biais de la liaison de communication (20) en mode de conduite une cote de la course de débrayage (9) de l'actionneur (8) afin de régler un couple d'accouplement correspondant de l'accouplement de séparation (4) ;
• la machine électrique (6) est connectée au dispositif de commande et de réglage (12) par le biais d'une liaison de communication (20), qui calcule en fonction de la vitesse de rotation de la machine électrique (6) un facteur qui augmente ou diminue en interne le couple d'accouplement requis de l'accouplement de séparation (4).

7. Dispositif de commande et de réglage selon la revendication 6, l'actionneur (8) de l'accouplement de séparation (4) pouvant régler une course de débrayage de l'accouplement de séparation (6) calculée en fonction de la vitesse de rotation de la machine électrique (6).

8. Entraînement hybride pour véhicule à moteur, comprenant un moteur à combustion interne (2), une machine électrique (6) et un accouplement de séparation (4) interposé entre le moteur à combustion interne (2) et la machine électrique (6), **caractérisé par** un dispositif de commande et de réglage (12) selon l'une quelconque des revendications 6 à 7.
